# EUROPÄISCHE PATENTSCHRIFT

(11) **EP 2 533 959 B1**
(45) Veröffentlichungstag und Bekanntmachung des Hinweises auf die Patenterteilung: **09.04.2014**
(21) Anmeldenummer: 11709628.9
(22) Anmeldetag: 08.02.2011
(51) Int. Cl.: B29C 43/22, B29C 33/10, B29C 33/38

(54) **VERFAHREN ZUR HERSTELLUNG EINES HAFTVERSCHLUSSTEILS, VERFAHREN ZUR HERSTELLUNG EINER FORMWALZE SOWIE FORMWALZE**
METHOD FOR PRODUCING AN ADHESIVE CLOSURE PART, METHOD FOR THE PRODUCTION OF A SHAPING ROLLER AND SHAPING ROLLER
PROCÉDÉ DE RÉALISATION D'UNE PIÈCE DE FERMETURE AUTO-AGRIPPANTE, PROCÉDÉ POUR RÉALISER UN CYLINDRE DE MOULAGE ET CYLINDRE DE MOULAGE

(30) Priorität: 09.02.2010 DE 102010007494
(43) Veröffentlichungstag der Anmeldung: 19.12.2012
(73) Patentinhaber: Windhager Holding AG, 6331 Hünenberg (CH)
(72) Erfinder: SEIFERT, Guntmar, 08525 Plauen (DE)
(74) Vertreter: Stippl, Hubert
(86) Internationale Anmeldenummer: PCT/EP2011/000577
(87) Internationale Veröffentlichungsnummer: WO 2011/098252

(56) Entgegenhaltungen:
- WO-A1-2006/058569
- DE-T2- 69 822 852
- FR-A1- 2 918 677

## Beschreibung

Die vorliegende Erfindung betrifft ein Verfahren zur Herstellung eines Haftverschlussteils gemäß dem Oberbegriff des Anspruchs 1. Ferner betrifft die vorliegende Erfindung ein Verfahren zur Herstellung einer Formwalze sowie eine Formwalze.

### Allgemeiner Hintergrund der Erfindung

Die Erfindung betrifft den Bereich mechanischer Verschlüsse, wie z.B. Klettoder Haken-Schlaufen-Verschlüsse unter Verwendung von Haftverschlussteile, beispielsweise pilzförmigen oder harpunenförmigen Haftverschlüssen, mit denen ein Bekleidungsstück lösbar verschlossen werden kann, Windeln lösbar verschlossen werden können sowie sonstige Gegenstände miteinander lösbar verbunden werden können usw.

Derartige Haftverschlussteile werden heutzutage in vielfältigen Anwendungsbereichen eingesetzt.

### Nächstliesender Stand der Technik

Aus der DE 198 28 856 C1 ist ein gattungsgemäßes Verfahren zur Herstellung eines Haftverschlussteils bekannt. Bei dem Verfahren wird eine Formwalze eingesetzt, welche Formhohlräume mit Hinterschneidungen aufweist. Hierzu weist die Formwalze ein durchgehende Hohlräume aufweisendes Sieb auf, welches an der vom Druckwerkzeug abgekehrten Seite des Siebes ein mit dessen Hohlräumen zusammenwirkendes, zweites formgebendes Element, beispielsweise in Form eines zweiten Siebes, aufweist. Die hierdurch gebildete Formwalze besitzt Formhohlräume mit stufiger Form. Der Formgebung der mit den Köpfen ausgebildeten Stiele sind daher Grenzen gesetzt. Dementsprechend ist es bei dem bekannten Verfahren notwendig, die Stielenden mit einer Kalandrierwalze einem Nachformungsprozess zu unterziehen. Darüber hinaus ist es schwierig, das erste und zweite Sieb in exakter deckungsgleicher Ausrichtung der Sieböffnungen zueinander auf die Formwalze aufzuziehen. Ferner bestehen die Siebe aus Nickel, welches bei thermischer Belastung nur über eine begrenzte Haltbarkeit verfügt.

Aus der DE 694 03 475 T2 ist ein Verfahren zur Herstellung eines Arbeitswerkzeuges mittels Laser bekannt. Formhohlräume mit Hinterschneidungen können mit diesem Verfahren nicht hergestellt werden.

Aus der DE 10 2007 057 905 A1 ergibt sich ein Haftverschlussteil und ein Verfahren zu dessen Herstellung unter Verwendung einer Formwalze mit Formhohlräumen, deren Wände bogenförmig ausgebildet sind. Diese ebenfalls mit Hinterschneidungen versehenen Formhohlräume sind schwierig herzustellen.

Aus der DE 692 18 952 T2 ist ein Siebdruckverfahren zur Herstellung eines Flächenreißverschlusses bekannt, bei dem eine poröse Walze mit einem inneren Vorratsbehälter verwendet wird, so dass im Inneren des Vorratsbehälters befindliches, geschmolzenes Material durch die Porosität dem Arbeitsbereich zugeführt werden kann.

Aus der DE 694 22 273 T2 ist ein Verfahren sowie eine Vorrichtung zur Herstellung eines Flächenhaftverschlusses bekannt, bei dem zunächst ein mit Haken versehenes Band erzeugt wird und gleichzeitig oder in einem daran sich anschließenden zweiten Verfahrensschritt auf das Band zusätzlich durch eine weitere Formwalze Schlaufenelemente aufgebracht werden. Im Bereich dieser weiteren Formwalze befindet sich im Inneren ein Saugabschnitt.

Aus der DE 698 22 852 T2 ist schließlich ein Verfahren zur Herstellung der Oberfläche einer Formwalze mit Hinterschneidungen aufweisenden Formhohlräumen bekannt. Hierbei werden sukzessive sehr dünne Schichten auf die Oberfläche eines Werkstücks in vorbestimmten Mustern galvanotechnisch abgeschieden. Als Material kann poröses Nickel verwendet werden, welches die Möglichkeit bieten soll, dass während der Befüllung der Formhohlräume eingefangene Luft aus dem Formhohlraum entweichen kann. Die Herstellung einer Formhohlfläche dauert Wochen und ist daher sehr langwierig. Die mit diesem Verfahren erzielbare Porosität ist daher verfahrenstechnisch auf eine sehr sehr feine Porosität begrenzt.

### Aufgabe der vorliegenden Erfindung

Die Aufgabe der vorliegenden Erfindung besteht darin, ein neuartiges, gattungsgemäßes Verfahren zur Verfügung zu stellen, welches die Ausbildung von multistrukturellen Verhakungselementen, d. h. Verhakungselementen in beliebiger Form auf einfache und effiziente Weise ermöglicht.

Ferner soll ein neuartiges Verfahren zur Herstellung einer Formwalze sowie eine neuartige Formwalze zur Verfügung gestellt werden.

### Gegenstand der vorliegenden Erfindung

Die vorstehende Aufgabe wird durch ein Verfahren zur Herstellung eines Haftverschlussteils mit einem Träger, einer einstückigen Anordnung aus emporragenden Stielen mit Köpfen an dem dem Träger gegenüberliegenden Ende der Stiele gelöst, bei dem ein erwärmter, thermoplastischer Kunststoff einem Spalt zugeführt wird, welcher gebildet wird aus einer mit Formhohlräumen ausgestatteten Formwalze sowie einer Gegenfläche, insbesondere einer Druckwalze, der erwärmte, thermoplastische Kunststoff in die Formhohlräume eingebracht wird, der erwärmte, thermoplastische Kunststoff in den Formhohlräumen verfestigt, die Stiele mit Köpfen aus den Formhohlräumen entfernt werden, der Träger mit den Stielen und Köpfen kontinuierlich abgezogen wird und die Formwalze im Bereich der Formhohlräume zumindest bereichsweise aus einem porösen Material besteht, welches eine Luftdurchlässigkeit gewährleistet, wobei es sich bei dem porösen Material um Materialschaum, Sintermaterial, aufgeschweißtes und/oder aufgespritztes Material handelt. Aus diesem Grund kann die beim Befüllen eingeschlossene Luft vom Formhohlraum weg entweichen.

Zweckmäßigerweise handelt es sich bei den Formhohlräumen um solche mit Hinterschneidungen. Das poröse Material erstreckt sich entlang der Längserstreckung des Formhohlraums.

Zweckmäßigerweise ist die Mantelfläche der Formwalze, also der äußere Bereich des porösen Materials nach außen hin abgedichtet, beispielsweise durch Aufbringen einer zusätzlichen Schicht oder durch mechanische Bearbeitung. Diese Abdichtung bewirkt, dass beim Anlegen eines Unterdrucks bzw. Überdrucks an das poröse Material sich der Effekt eines Druckabfalls bzw. Druckaufbaus in den Formhohlräumen besonders stark bemerkbar macht. Zudem oder alternativ kann hierdurch eine andere Oberflächenbeschaffenheit im Bereich des Trägers erzielt werden.

Gemäß einem Aspekt der Erfindung dienen die Poren auch dazu, Schmelze während des Befüllens der Formhohlräume aufzunehmen, wodurch diese Bereiche nach dem Entfernen als vom Stiel abstehende, zusätzlich verhakend wirkende Vorsprünge vorhanden sind, die die Verhakungsintensität mit Schlingenmaterial oder ähnlichem zusätzlich erhöht.

Das Entformen der Verhakungselemente, insbesondere wenn diese sich mit ihren Vorsprüngen zusätzlich in die Porosität des Formmaterials hinein erstrecken, wird dadurch erleichtert, dass im Bereich des Formhohlraums eine die Gleitfähigkeit erhöhende Beschichtung, vorzugsweise eine Nanobeschichtung vorgesehen ist.

Die Art der Porosität der Druckwalze erlaubt es, dass nicht nur Luft über die Porosität beim Befüllen entweichen kann, sondern aktiv ein Unterdruck und/oder Überdruck gezielt eingestellt werden kann. Dies unterstützt das Entformen von komplizierteren Teilen und ermöglicht einen schnellen und damit effizienteren Betrieb.

Dieses Beaufschlagen der Formhohlräume mit Druck oder Unterdruck kann derart vorgesehen sein, dass abhängig von der Drehstellung entweder ein Unterdruck oder ein Überdruck an den Formhohlräumen ansteht.

Die Orientierung der Formhohlräume der porösen Schicht ist im Wesentlichen senkrecht. Gebildet wird die senkrechte Orientierung durch eine im Wesentlichen senkrecht zur Mantelfläche vorgenommene Bearbeitung, wie z.B. eine Bohrung, Lasern oder ein Erodieren. An dem der Mantelfläche gegenüberliegenden Bereich des Formhohlraums schließt sich an den senkrecht zur Oberfläche verlaufenden Wandabschnitt ein erweiternder Wandabschnitt an. Dieser kann zweckmäßigerweise durch nachträgliches Ätzen, vorzugsweise Sprühätzen erzeugt werden.

Besonders gute Ergebnisse werden erzielt, wenn die Durchlässigkeit der Porosität in einem Bereich von 0,010 - 0,09 1/min-cm²-bar, vorzugsweise 0,015 - 0,08 1/min-cm²-bar, besonders vorzugsweise 0,02 - 0,07 1/min-cm²-bar liegt, wobei ein Druck zwischen 3 bar und 7 bar angelegt wird. Dieser Porositätsbereich unterstützt die Möglichkeit eines aktiven Beaufschlagens der Formhohlräume mit Unterdruck bzw. Überdruck.

Die vorliegende Erfindung betrifft des Weiteren ein Verfahren zur Herstellung einer Formwalze für den Einsatz in einem Verfahren gemäß mindestens einem der vorhergehenden Ansprüche. Gemäß dem Verfahren wird eine einstückige poröse Schicht hergestellt, wobei die poröse Schicht mit einem Grundträger einer Formwalze verbunden wird. Anschließend werden Löcher in die poröse Schicht eingebracht.

Der sich erweiternde Bereich wird durch Ätzen, vorzugsweise Sprühätzen hergestellt.

Die Mantelfläche der Form, die die poröse Schicht enthält, ist im Bereich der Außenseite der Formwalze abgedichtet.

Die vorliegende Erfindung betrifft darüber hinaus auch eine Formwalze, die für den Einsatz in einen der Ansprüche 1-11 beschriebenen Verfahren verwendet wird.

### Ausführungsbeispiele der Erfindung

Zweckmäßige Ausgestaltungen der vorliegenden Erfindung werden anhand der Zeichnungsfiguren näher erläutert. Es zeigen:
- Fig. 1:: eine stark vereinfachte schematische Darstellungsweise des Grundprinzips der Herstellung eines Haftverschlussteils gemäß der vorliegenden Erfindung;
- Fig. 2:: eine stark vereinfachte schematische Detaildarstellung im Teilschnitt durch die Formwalze im Bereich eines Formhohlraums gemäß einer ersten Ausgestaltung;
- Fig. 3:: eine stark vereinfachte schematische Detaildarstellung im Teilschnitt durch die Formwalze im Bereich eines Formhohlraums gemäß einer zweiten Ausgestaltung der vorliegenden Erfindung;
- Fig. 4:: eine stark vereinfachte schematische Detaildarstellung im Teilschnitt durch die Formwalze im Bereich eines Formhohlraums gemäß einer dritten Ausgestaltung der vorliegenden Erfindung.
- Fig. 5:: eine stark vereinfachte schematische Darstellung eines pilzförmigen Stiels, hergestellt durch Verwendung einer Form gemäß Fig. 2;
- Fig. 6:: jeweils beispielshaft eine mikroskopische Aufnahme eines Metallschaummaterials (Fig. 6A) sowie eines Sintermaterials (Fig. 6B);
- Fig. 7:: eine stark vereinfachte schematische, perspektivische Ansicht eines Teilbereichs der Formwalze;
- Fig. 8:: eine stark vereinfachte schematische Darstellung der Formwalze jeweils mit dem der Arbeitspunkt A (Befüllen der Formhohlräume) sowie B (Entfernung der Formlinge aus dem Formhohlraum) sowie
- Fig. 9:: eine stark vereinfachte schematische Teilschnittdarstellung der Formwalze mit segmentweise auf die Formhohlräume aufzubringenden Unterdruck sowie Überdruck.

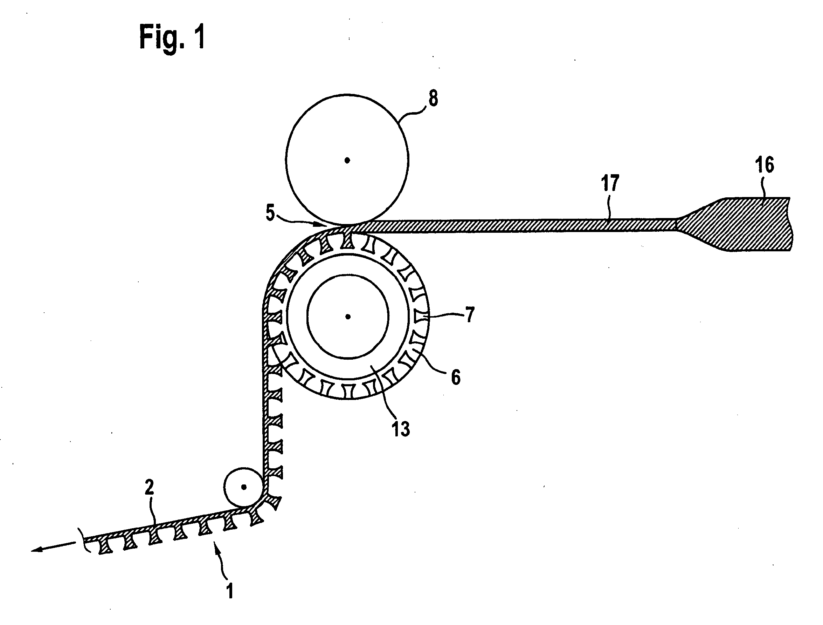

Bezugsziffer 1 in Fig. 1 bezeichnet das Haftverschlussteil in seiner Gesamtheit. Es umfasst einen Träger 2 sowie von der Grundfläche des Trägers emporragende Stiele 3, an deren dem Träger 2 entgegengesetzten Ende sich ein erweitertes Verhakungselement 4 anschließt.

Zur Herstellung des Haftverschlussteils 1 wird thermoplastisches Material, z.B. Polyethylen, Polypropylen oder dergleichen, aus einem Extruder 16 als Schmelzfahne 17 einem Walzenspalt 5 zugeführt. Der Walzenspalt 5 wird gebildet durch eine Formwalze 6 sowie eine Druckwalze 8.

Die Formwalze 6 besitzt im Bereich ihrer Außenumfangsfläche eine Vielzahl von kleinsten Formhohlräumen 7. Die Formhohlräume sind in Fig. 1 aus Gründen der besseren Darstellbarkeit stark vergrößert wiedergegeben. Tatsächlich können sich auf einem Quadratzentimeter üblicherweise zwischen 10 - 900, zweckmäßigerweise 150 bis 400 Formhohlräume befinden. Der die Formhohlräume umfassende Bereich der Formwalze 6 ist auf einen Grundträger 13 der Formwalze 7 aufgebracht.

Im Walzenspalt 5 wird das geschmolzene thermoplastische Material in die einzelnen Formhohlräume 7 eingedrückt. Sowohl die Formwalze 6 als auch die Druckwalze 8 werden auf einer geeigneten Temperatur gehalten, d.h. getempert, um zu gewährleisten, dass sich das geschmolzene thermoplastische Material im Bereich des Walzenspalts 5 sowie der Formhohlräume verfestigt.

Nach der Verfestigung an einem sich am Umlauf der Formwalze befindlichen Arbeitspunkt wird das Haftverschlussteil 1 abgezogen und die Stiele 3 mit den daran befindlichen Verhakungselementen 4 von den Formhohlräumen 7 entfernt. Das Haftverschlussteil weist hierdurch sogleich Stiele 3 mit daran befindlichen Verhakungselementen 4 auf, die als solche auch ohne Nachbehandlung, z.B. ohne ein Kalandrieren mittels Kalandrierwalze, zum Einsatz kommen können.

Alternativ besteht die Möglichkeit, die Form der Verhakungselemente 4 im Rahmen eines nachfolgenden (in Fig. 1 nicht dargestellten) Bearbeitungsvorgangs, mittels einer Heizeinrichtung (z. B. Plasma), einer Ultraschallsonotrode, mit einer Kalanderwalze oder einer Kombination der vorerwähnten Verfahren die Form zu verändern, beispielsweise abzuflachen. Wie es aus Fig. 1 ersichtlich ist, handelt es sich bei dem in Rede stehenden Verfahren um einen kontinuierlichen Produktionsprozess.

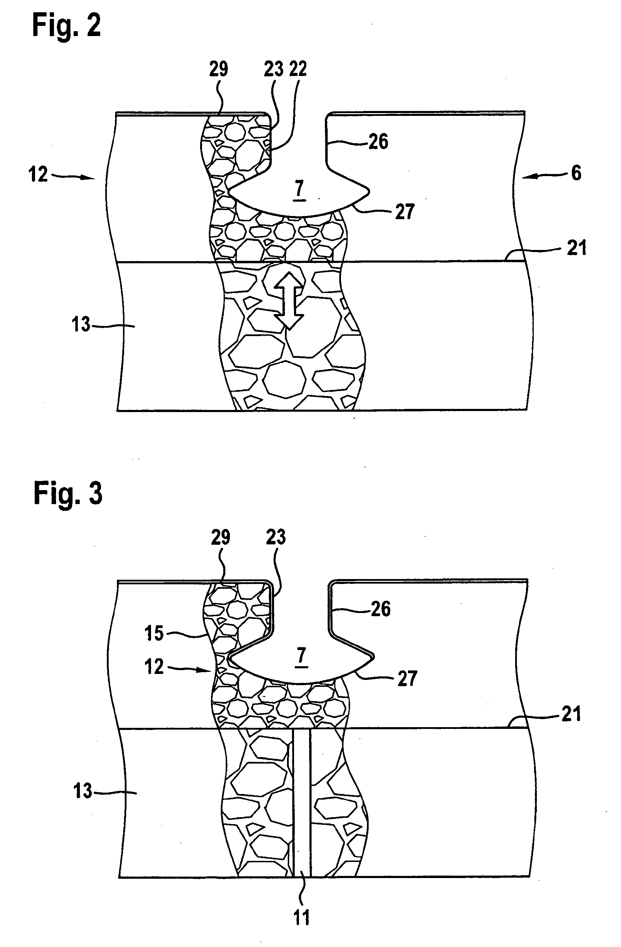

Fig. 2 zeigt den Formhohlraum 7 (in Fig. 2 ist der Übersichtlichkeit halber lediglich ein einziger dargestellt). Die Formwalze 6 umfasst eine Schicht 12 aus porösem Material mit offener Porosität. Im Falle der Ausgestaltung nach Fig. 2 handelt es sich um aufgespritztes Material, insbesondere Metall. Die Poren 22 durchbrechen den senkrecht verlaufenden Wandabschnitt 26 und ermöglichen, dass aufgrund der Luftdurchlässigkeit Schmelze in diese Kanäle 22 eindringen und dort erstarren kann. Darüber hinaus baut sich kein Luftpolster innerhalb des Formhohlraums 7 beim Befüllen auf. Die Schicht 12 aus porösem Material befindet sich auf einem Grundträger 13 der Formwalze 6. Der Grundträger 13 kann entweder ebenfalls aus einem porösen Material bestehen oder aber (in Fig. 2 nicht dargestellte) Kanäle aufweisen, die dafür vorgesehen sind, Luft aus dem Bereich 12 abzuleiten oder dem vorgenannten Bereich zuzuführen. Die äußere Mantelfläche der Druckwalze 6 kann - wie in der Figur dargestellt ist - mit einer Schicht 29 nach außen hin abgedichtet sein. Bei der Schicht 29 kann es sich um eine zusätzlich aufgebrachte Schicht oder aber um eine mechanisch oder thermisch verdichtete Schicht des Materials der Schicht 12 des porösen Materials handeln.

Falls kein Vakuum angelegt wird, kann auf die Schicht 29 auch verzichtet werden.

Es muss auch nicht unbedingt Schmelze in die Kanäle 22 eindringen. Falls die Kanäle 22 kleiner sind, kann hierdurch Luft entweichen, ohne dass Schmelze in den jeweiligen Kanal eindringt.

Die Schicht 12 steht mit dem Grundträger 13 der Formwalze 6 über eine Verbindungsschicht, z.B. eine Klebeschicht 21 in Verbindung. Die Klebeschicht 21 ist zur Gewährleistung eines Luftdurchgangs lediglich an Teilflächen vorgesehen. Beispielsweise kann die Klebefläche als segmentierte Fläche ausgebildet sein, z.B. derart, dass die Klebefläche lediglich in den Zwischenbereichen zwischen zwei Formhohlräumen 7 wirksam ist bzw. dort vorhanden ist.

Der Formhohlraum 7 umfasst einen senkrecht verlaufenden Wandabschnitt 26 sowie einen am Ende dieses Wandabschnitts sich anschließenden, erweiternden Wandabschnitt 27.

Diese Formgebung resultiert daraus, dass zunächst der senkrecht verlaufende Wandabschnitt 26 durchgängig erzeugt wird, beispielsweise unter Zuhilfenahme eines Bohrers, Lasers oder eines Erodierers. Nachträglich wird durch das sogenannte Sprühätzen am unterseitigen Ende des senkrechten verlaufenden Wandabschnitts ein sich erweiternder Wandabschnitt 27 gebildet.

Gemäß der vorliegenden Erfindung wird somit ein Formhohlraum 7 mit Hinterschneidung gebildet.

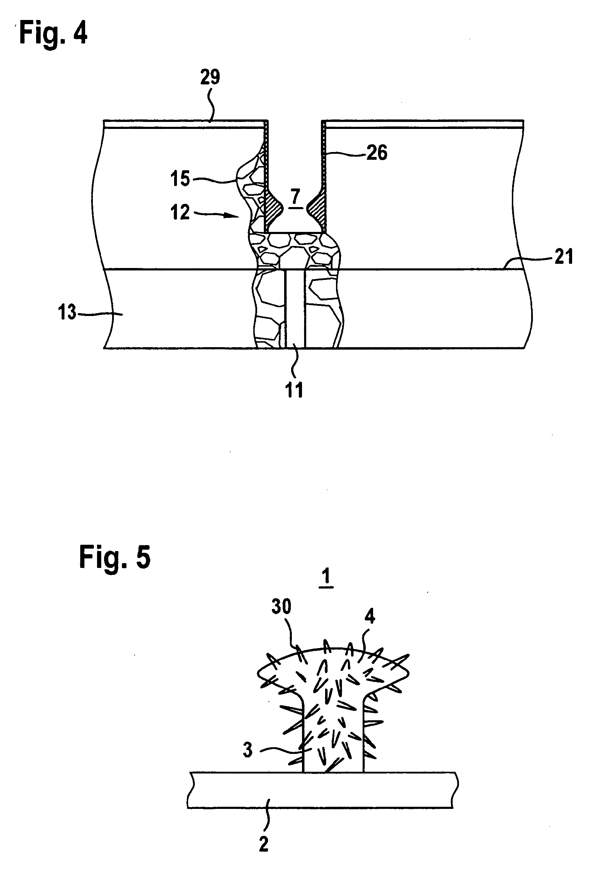

Das aus dem Formhohlraum gemäß Fig. 2 hergestellte Haftverschlussteil zeigt einen Stiel 3 mit einem sich erweiternden Kopf, d.h. Verhakungselement 4 , wobei sich an dem Stiel 3 sowie dem erweiterten Kopf einzelne wurmfortsatzartige Vorsprünge 30 befinden (vgl. Fig. 5). Die vorgenannten Vorsprünge 3 können bei bestimmten Anforderungen vorgesehen sein.

Um das Entformen derartig ausgebildeter Stiele zu erleichtern, kann im Bereich des Formhohlraums 7 eine die Gleitfähigkeit des erstarrten Materials steigernde Beschichtung, beispielsweise eine Nanopartikelschicht 23, vorgesehen sein. Die Nanopartikelschicht 23 befindet sich bei dem in Fig. 2 dargestellten Formhohlraum 7 sowohl im Bereich des senkrecht verlaufenden Wandabschnitts 26 als auch zumindest zum Teil im Inneren der von diesem abzweigenden Poren 22. Gleiches gilt für die von dem sich erweiternden Wandabschnitt 27 abzweigenden Poren.

Bei dem in Fig. 2 dargestellten porösen Material der Schicht 12 handelt es sich um geschäumtes Hartmaterial, insbesondere Metallschaum.

Bei der in Fig. 3 dargestellten Ausgestaltung ist im Bereich der Schicht 12 sogenanntes Sintermaterial vorgesehen, welches ebenfalls eine offene Porosität gewährleistet. Auch hier steht der Formhohlraum 7 über die Porosität der Schicht 12 sowie in diesem Fall z.B. über einen Entlüftungskanal 11 des Grundträgers 13 mit einer (nicht dargestellt) Vakuumpumpe oder einer (nicht dargestellt) Druckbeaufschlagungspumpe in Verbindung. Der Entlüftungskanal 11 kann aber auch nur für ein Entweichen der im Formhohlraum 7 eingeschlossenen Luft (ohne Vakuum bzw. Druckbeaufschlagungspumpe) dienen.

Die sonstigen Merkmale der Formwalze 6 gemäß Fig. 3 entsprechen der Ausgestaltung nach Fig. 2.

Gemäß einer alternativen Ausgestaltung der erfindungsgemäßen Formwalze, wird gemäß Fig. 4 eine Hinterschneidung des sich am Stiel befindlichen Kopfes dadurch erreicht, dass innerhalb des Formhohlraums 7 ein galvanischer Auftrag 28 mit sich entlang der Höhe des Formhohlraums 7 variierenden Durchmessers aufgebaut wird. Dieser galvanische Auftrag 28 bewirkt eine Hinterschneidung innerhalb des Formhohlraums 7 und demzufolge einen nach außen vorspringenden Kopfbereich beim entformten Produkt.

Hinsichtlich der Herstellung der porösen Schicht 12 gibt es mehrere Möglichkeiten. Wichtig ist es, dass mit dem jeweiligen Verfahren eine definierte Porengröße erzeugt werden kann, die einen definierten Luftdurchlass für ein Absaugen der Formhohlräume 7 und/oder ein unter Druck setzen der Formhohlräume ermöglicht. Dies wiederum erleichtert die Herstellung von Haftverschlussteilen 1 mit vielfältigen Verhakungselementen 4. Die Porengröße sollte größer 10 µm, vorzugsweise größer 15 µm, vorzugsweise größer 20 µm sein.

Als Verfahren zur Erzeugung der Schicht 12 aus porösem Material stehen insbesondere folgende Verfahren zur Verfügung:
a) Gespritztes Material, insbesondere Metall (AL, CU, Stahl einschließlich deren Legierungen oder Kohlenstoff, wie z.B. kalzinierter Kohlenstoff oder Grafit) in Form von aufgespritzten und gebundenen Partikeln, Plasma-Pulver-Auftragschweißen, Plasmaspritzen, Feuerspritzen, Lichtbogenspritzen, HVOF-Spritzen. Zumeist wird von pulverförmigen Spritzwerkstoffen von Korngrößen zwischen 1-150 µm ausgegangen. Es ist allerdings auch möglich, ein stabförmiges oder drahtförmiges Material zu verwenden.
b) Plasma-Pulver-Auftragschweißen.
c) Sintern; hierbei wird eine Schüttung der Partikel mit einer bestimmten Korngröße bzw. Korngrößenverteilung der bereits oben erwähnten Materialien unter Druck und hoher Temperatur miteinander zu einem Festkörper verbunden, welcher eine Porosität aufweist. Durch Auswahl der Partikelgrößen kann gezielt Einfluss auf die zu erreichende Porosität genommen werden;
d) Geschäumtes Material, insbesondere offenporiger Metallschaum; die Herstellung von Metallschäumen geschieht mittels eines Metallpulvers und einem Metallhydrid, z.B. dem Titandehydrid. Beide Pulver werden miteinander vermischt und dann durch Pressen zu einem Vormaterial verdichtet. Das Vormaterial wird dann auf Temperatur oberhalb des Schmelzpunktes des Metalls erhitzt. Dabei setzt das Titandehydrid gasförmigen Wasserstoff frei und schäumt das Gemenge auf. Alternativ kann auch Gas in eine Metallschmelze eingeblasen werden, die zuvor durch Zugabe fester Bestandteile schäumbar gemacht wurde. Darüber hinaus gibt es das sogenannte Schlickerreaktionsschaumsinter-Verfahren (SRSS-Verfahren), mit dem insbesondere Eisen-, Stahl- und Nickelschäume hergestellt werden können.

Ein besonders rasches Einziehen der Schmelze in die Formhohlräume aufgrund eines dort unmittelbar während des Befüllungsvorgangs vorherrschenden Unterdrucks sowie des Weiteren ein wirksames Ausdrücken des verfestigten Formlings im Bereich des Arbeitspunkts des Entfemens des Formlings aus dem Formhohlraum durch das Vorhandensein eines Überdrucks in dem Formhohlraum trägt ganz entscheidend zur Erhöhung der Durchlaufgeschwindigkeit des Herstellungsverfahrens bei.
Das Anlegen eines Unterdrucks ist aber nicht unbedingt nötig.

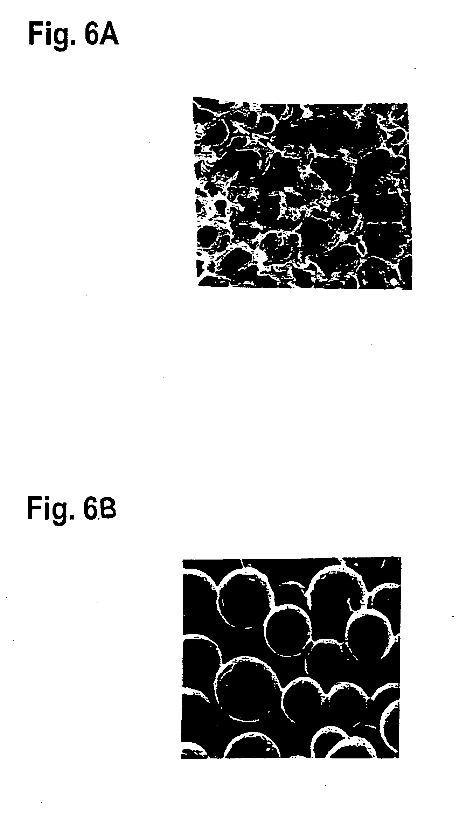

All den vorstehend genannten Verfahren ist gemeinsam, dass mit ihnen eine ausreichende Porosität erzielbar ist. Demgegenüber ist mit einem galvanischen Verfahren die Erzeugung einer solchen Porosität nicht möglich. Aus Fig. 6A ist eine mikroskopische Aufnahme eines Metallschaums mit offener Porosität zu erkennen. Fig. 6B zeigt eine mikroskopische Aufnahme eines Sinterkörpers und dessen durch die Anordnung der einzelnen Partikel begründete Porosität.

Die Schicht 12 aus porösem Material wird zweckmäßigerweise als einstückige ebene Schicht hergestellt und anschließend auf den Grundträger 13 aufgezogen und mit letzterem verbunden, z.B. mittels einer Klebeschicht 21 partiell mit dem Grundkörper 12 verklebt. Die Schichtdicke 12 liegt im Bereich von 0,1 - 15 mm, zweckmäßigerweise im Bereich von 400 bis 600 µm. Die Klebesicht 21 ist zur Ermöglichung eines Luftdurchtritts mit einer Strukturierung, z.B. einer Vielzahl von Durchtrittsöffnungen bzw. Durchtrittsflächen versehen.

Im Falle eines Aufspritzens bzw. eines Aufschweißens von porösem Material kann dies direkt auf der Formwalze 6 bzw. deren Grundträger 13 erfolgen.

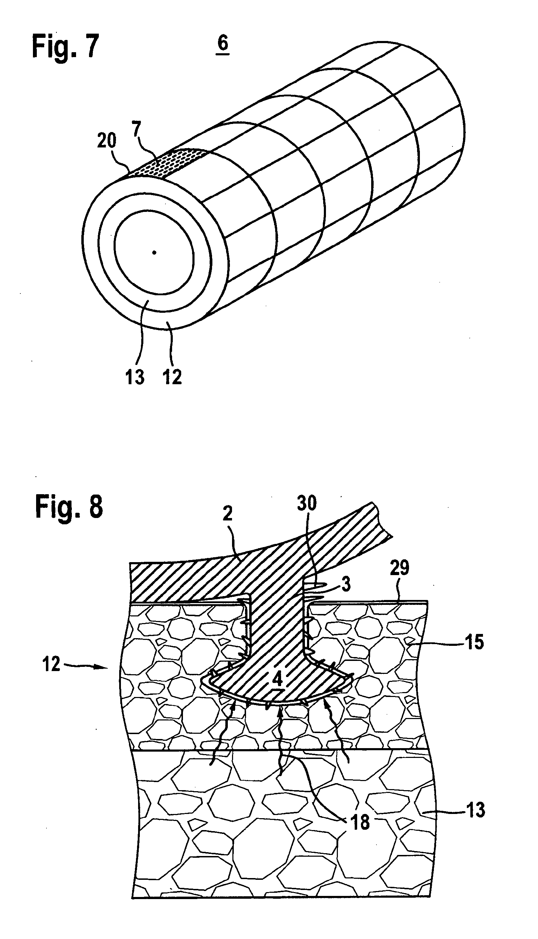

Vorzugsweise werden einzelne Segmente 20, wie in Fig. 7 gezeigt, entlang der Oberfläche der Formwalze 6 aneinandergefügt bis die gesamte Oberfläche der Formwalze 6 mit Segmenten 20 bedeckt ist. Hierbei handelt es sich um Mantelausschnittsegmente mit einer Mindestzahl von drei Segmenten 20 entlang des Umfangs der Formwalze 6. Aus zeichnerischen Gründen sind in Fig. 7 die Formhohlräume 7 lediglich bei einem Segment 20 dargestellt, obgleich sie in Wirklichkeit bei allen Segmenten 20 vorhanden sind.

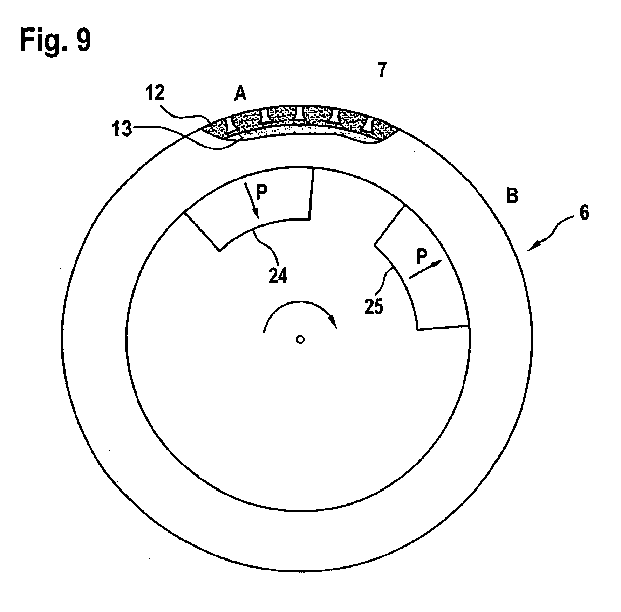

Aufgrund der Porosität der Schicht 12 kann während des Entformens, das in Fig. 8 in stark vereinfachter schematischer Darstellungsweise wiedergegeben ist, durch Einbringen eines Überdrucks (Luftdruckstrom 18) in das Innere des Formhohlraums 7 unterstützt werden. Bei der in Fig. 8 dargestellten Position handelt es sich um die Entformposition B, wie sie in Fig. 9 unter Bezugnahme auf die Lage zur Formwalze 6 wiedergegeben ist.

Ebenso kann ein Befüllen der Formhohlräume 7 mit thermoplastischem Harz (siehe Position A in Fig. 8) durch ein Anlegen eines Unterdrucks im Inneren des Formhohlraums 7 unterstützt werden.

Beispielsweise weist die Formwalze 6 gemäß Fig. 9 zweckmäßigerweise ein Segment 24, welches für den Aufbau eines Unterdrucks in dem Formhohlraum 7 sowie ein Segment 25, welches für den Aufbau eines Überdrucks in dem Formhohlraum 7 vorgesehen ist, auf. Die Segmente 24 und 25 sind ortsfest, d.h. die Formwalze 6 dreht sich während der Produktion der Haftverschlussteile 1 über die beiden Segmente 24, 25 hinweg. Der besseren Übersichtlichkeit halber ist das Haftverschlussteil 1 sowie die Druckwalze 8 in Fig. 9 nicht dargestellt. Dreht sich also die Formwalze während des Herstellungsverfahrens des Haftverschlussteils 1 kontinuierlich, so wird im Bereich des Segments 24 Unterdruck an die Formhohlräume 7 der Formwalze 6 angelegt und die Formwalze 6 im Arbeitsbereich A mit einem Unterdruck beaufschlagt Dieser ermöglicht es, dass die thermoplastische Schmelze schnell in die Formhohlräume 7 gelangen kann und dort aushärtet.

Demgegenüber wird im Bereich des Segments 25 Am Arbeitspunkt B (Entformen) Überdruck angelegt, der, wie dies bereits in Fig. 8 vereinfacht dargestellt ist, das Entformen des Stiels 3 mit den Verhakungselementen 4 aus dem Formhohlraum 7 erleichtert. Die Porosität der Schicht 12 ermöglicht es daher, ein besonders effizientes Verfahren durchzuführen. Die Poren des Materials der Schicht 12 liegen im Bereich von 10 µm bis 100 µm, vorzugsweise 20 µm bis 80 um.

Vom Schutz umfasst ist ebenfalls eine Formwalze, die durch das oben genannte Verfahren hergestellt worden ist, es wird ausdrücklich darauf hingewiesen, das auch Einzelmerkmale der dargestellten Ausführungsbeispiele untereinander ausgetauscht werden sollen, d.h. die vom Offenbarungsgehalt der Anmeldung abgedeckt ist.

Das erfindungsgemäße Verfahren ermöglicht es, Haftverschlussteile mit Stielen und daran befindlichen Verhakungselementen in effektiver Weise herzustellen. Die Erfindung stellt daher einen ganz wesentlichen Beitrag auf dem einschlägigen Gebiet der Technik dar.

### BEZUGSZEICHENLISTE

- 1: Haftverschlussteil
- 2: Träger
- 3: Stiele
- 4: Verhakungselement
- 5: Walzenspalt
- 6: Formwalze
- 7: Formhohlräume
- 8: Druckwalze
- 9: Lage
- 10: Lage
- 11: Entlüftungskanal
- 12: Schicht
- 13: Grundträger
- 14: Luftstrom
- 15: gekörntes Material
- 16: Extruder
- 17: Schmelzfahne
- 18: Druckluftstrom
- 19: Partikel
- 20: Segment
- 21: Klebeschicht
- 22: Pore
- 23: Nanopartikelschicht
- 24: Segment Unterdruck
- 25: Segment Überdruck
- 26: senkrecht verlaufender Wandabschnitt
- 27: sich erweiternder Wandabschnitt
- 28: galvanischer Auftrag
- 29: Schicht
- 30: Vorsprung

## Patentansprüche

1. Verfahren zur Herstellung eines Haftverschlussteils (1) mit einem Träger (2), einer einstückigen Anordnung aus emporragenden Stielen mit Verhakungselementen (4) in dem dem Träger gegenüberliegenden Bereich der Stiele (3), bei dem
ein erwärmter, thermoplastischer Kunststoff einem Spalt (5) zugeführt wird, welcher gebildet wird aus einer mit Formhohlräumen (7) ausgestatteten Formwalze sowie einer Gegenfläche, insbesondere einer Druckwalze (8),
der erwärmte, thermoplastische Kunststoff in die Formhohlräume (7) eingebracht wird,
der erwärmte, thermoplastische Kunststoff in den Formhohlräumen (7) verfestigt,
die Stiele (3) mit Verhakungselementen (4) aus den Formhohlräumen (7) entfernt werden,
der Träger (2) mit den Stielen (3) und den Verhakungselementen (4) kontinuierlich abgezogen wird und
die Formwalze (6) im Bereich der Formhohlräume (7) zumindest bereichsweise aus einem porösen Material besteht, welches eine Luftdurchlässigkeit gewährleistet,
**dadurch gekennzeichnet, dass**
es sich bei dem porösen Material um Materialschaum, Sintermaterial, aufgeschweißtes und/oder aufgespritztes Material handelt.

2. Verfahren nach Anspruch 1,
**dadurch gekennzeichnet, dass**
die Mantelfläche der Formwalze (6) mit einer einen Luftdurchtritt verhindernden oder zumindest im Vergleich zum porösen Material den Luftdurchtritt reduzierenden Schicht (29) versehen ist.

3. Verfahren nach Anspruch 1 oder 2,
**dadurch gekennzeichnet, dass**
im Bereich des Formhohlraums (7) durch die Größe der an die Wand des Formhohlraums angrenzenden Poren (22) bedingt Schmelze in die Pore (22) eindringt und diese nach dem Entfernen aus dem Formhohlraum (7) an dem Haftverschlussteil (1) als vom Stiel (3) abstehende Vorsprünge (30) vorgesehen sind.

4. Verfahren nach mindestens einem der vorhergehenden Ansprüche,
**dadurch gekennzeichnet, dass**
die Oberfläche im Bereich des Formhohlraums (7), vorzugsweise einschließlich zumindest eines Teils der Poren (22), mit einer die Gleitfähigkeit erhöhenden Beschichtung, vorzugsweise einer Nano-Partikelschicht (23) beschichtet ist.

5. Verfahren nach mindestens einem der vorhergehenden Ansprüche,
**dadurch gekennzeichnet, dass**
vor und/oder während des Befüllens des Formhohlraums (7) die in letzterem befindliche Luft über die Porosität des Materials der Formwalze (6) abgesaugt wird.

6. Verfahren nach mindestens einem der vorhergehenden Ansprüche,
**dadurch gekennzeichnet, dass**
zur Unterstützung des Entfernens der Stiele (3) mit Verhakungselementen (4) über die Porosität des Materials der Formwalze (6) ein Überdruck innerhalb des Formhohlraums (7) erzeugt wird.

7. Verfahren nach mindestens einem der vorhergehenden Ansprüche,
**dadurch gekennzeichnet, dass**
abhängig von der Drehstellung der Formwalze (6) entweder Unterdruck oder Überdruck innerhalb der Formhohlräume (7) erzeugt wird.

8. Verfahren nach mindestens einem der vorhergehenden Ansprüche,
**dadurch gekennzeichnet, dass**
die Orientierung des Formhohlraums (7) im wesentlichen senkrecht zur Mantelfläche der Formwalze (6) ist.

9. Verfahren nach mindestens einem der vorhergehenden Ansprüche,
**dadurch gekennzeichnet, dass**
der Formhohlraum (7) einen, vorzugsweise im wesentlichen senkrecht zur Oberfläche verlaufenden, Wandabschnitt (26) sowie einen daran sich anschließenden erweiterten Wandabschnitt (27) aufweist.

10. Verfahren nach mindestens einem der vorhergehenden Ansprüche,
**dadurch gekennzeichnet, dass**
ein Teilbereich des Formhohlraums (7), vorzugsweise der sich erweiternde Wandabschnitt (27) des Formhohlraums (7), geätzt, vorzugsweise sprühgeätzt ist.

11. Verfahren nach mindestens einem der vorhergehenden Ansprüche,
**dadurch gekennzeichnet, dass**
ein Teilbereich des Formhohlraums (7), vorzugsweise der im wesentlichen senkrecht zur Oberfläche verlaufende Wandabschnitt (26) des Formhohlraums (7) gebohrt, erodiert oder mit einem Laser eingebracht ist.

12. Verfahren nach mindestens einem der vorhergehenden Ansprüche,
**dadurch gekennzeichnet, dass** die Porosität in einem 1/min-cm²-bar Bereich von 0,010 - 0,09, vorzugsweise 0,015 - 0,08 1/min-cm²-bar, besonders vorzugsweise von 0,02 - 0,07 1/min-cm2⁻bar liegt, wenn ein Druck zwischen 3 bar und 7 bar angelegt wird.

13. Verfahren zur Herstellung einer Formwalze für den Einsatz in einem Verfahren gemäß mindestens einem der vorhergehenden Ansprüche,
wobei
eine einstückige poröse Schicht (12) hergestellt wird, die poröse Schicht mit einem Grundträger (13) der Formwalze (6) verbunden wird und anschließend Löcher in die poröse Schicht (12) eingebracht werden.

14. Verfahren nach Anspruch 13,
**dadurch gekennzeichnet, dass**
anschließend durch Ätzen, vorzugsweise Sprühätzen der sich erweiternde Bereich gebildet wird.

15. Verfahren nach Anspruch 13 oder 14,
**dadurch gekennzeichnet, dass**
die poröse Schicht (12) im Bereich der Mantelfläche der Formwalze (6) nach außen hin abgedichtet ist.

16. Formwalze für den Einsatz in einem Verfahren gemäß mindestens einem Verfahren gemäß mindestens einem der vorhergehenden Ansprüche 1 - 12, welche nach einem Verfahren gemäß Anspruch 13-15 hergestellt ist.

## Claims

1. Method for producing an adhesive closure part (1) with a carrier (2) and with a one-piece arrangement of projecting stalks with hooking elements (4) in that region of the stalks (3) which lies opposite the carrier, in which
a heated thermoplastic is delivered to a nip (5) which is formed from a shaping roller equipped with shaping cavities (7) and from an opposite surface, in particular a pressure roller (8),
the heated thermoplastic is introduced into the shaping cavities (7),
the heated thermoplastic is solidified in the shaping cavities (7),
the stalks (3) with hooking elements (4) are removed from the shaping cavities (7),
the carrier (2) with the stalks (3) and with the hooking elements (4) is drawn off continuously, and
the shaping roller (6) consists in the region of the shaping cavities (7), at least in regions, of a porous material which ensures air permeability,
**characterized in that**
the porous material is material foam, sintered material, welded-on and/or sprayed-on material.

2. Method according to Claim 1, **characterized in that** the surface area of the shaping roller (6) is provided with a layer (29) which prevents the passage of air or which reduces the passage of air at least in comparison with the porous material.

3. Method according to Claim 1 or 2, **characterized in that**, in the region of the shaping cavity (7), due to the size of the pores (22) adjacent to the wall of the shaping cavity, melt penetrates to a limited extent into the pores (22), and, after removal from the shaping cavity (7), these are provided on the adhesive closure part (1) as protrusions (30) projecting from the stalk (3).

4. Method according to at least one of the preceding claims, **characterized in that** the surface in the region of the shaping cavity (7), preferably including at least some of the pores (22), is coated with a coating which increases slideability, preferably with a nano-particle layer (23).

5. Method according to at least one of the preceding claims, **characterized in that**, before and/or during the filling of the shaping cavity (7), the air located in the latter is sucked away via the porosity of the material of the shaping roller (6).

6. Method according to at least one of the preceding claims, **characterized in that**, to assist the removal of the stalks (3) with hooking elements (4), overpressure is generated within the shaping cavity (7) via the porosity of the material of the shaping roller (6).

7. Method according to at least one of the preceding claims, **characterized in that** either underpressure or overpressure is generated within the shaping cavities (7), depending on the rotary position of the shaping roller (6).

8. Method according to at least one of the preceding claims, **characterized in that** the orientation of the shaping cavity (7) is essentially perpendicular to the surface area of the shaping roller (6).

9. Method according to at least one of the preceding claims, **characterized in that** the shaping cavity (7) has a wall portion (26) preferably running essentially perpendicularly to the surface and also a widened wall portion (27) adjoining the said wall portion.

10. Method according to at least one of the preceding claims, **characterized in that** a subregion of the shaping cavity (7), preferably the widening wall portion (27) of the shaping cavity (7), is etched, preferably sputter-etched.

11. Method according to at least one of the preceding claims, **characterized in that** a subregion of the shaping cavity (7), preferably that wall portion (26) of the shaping cavity (7) which runs essentially perpendicularly to the surface, is drilled, eroded or introduced by means of a laser.

12. Method according to at least one of the preceding claims, **characterized in that** the porosity lies within a range of 0.010 - 0.09 1/min-cm²-bar, preferably of 0.015 - 0.08 1/min-cm²-bar, especially preferably of 0.02-0.07 1/min-cm²-bar, when a pressure of between 3 bar and 7 bar is applied.

13. Method for the production of a shaping roller for use in a method according to at least one of the preceding claims, a one-piece porous layer (12) being produced, the porous layer being connected to a base carrier (13) of the shaping roller (6), and holes subsequently being introduced into the porous layer (12).

14. Method according to Claim 13, **characterized in that** the widening region is subsequently formed by etching, preferably sputter-etching.

15. Method according to Claim 13 or 14, characterized tin that the porous layer (12) is sealed off outwardly in the region of the surface area of the shaping roller (6).

16. Shaping roller for use in a method according to at least one method according to at least one of the preceding Claims 1-12, which is produced by a method according to Claims 13-15.

## Revendications

1. Procédé de réalisation d'une pièce de fermeture auto-agrippante (1) avec un support (2), un dispositif en une seule pièce composé de picots dressés avec des éléments d'accrochage (4) dans la région des picots (3) opposée au support, dans lequel
on envoie une matière plastique thermoplastique chauffée à une fente (5), qui est formée par un cylindre de moulage doté de cavités de moulage (7) et un cylindre opposé, en particulier un cylindre de pression (8),
on introduit la matière plastique thermoplastique chauffée dans les cavités de moulage (7),
la matière plastique thermoplastique chauffée se solidifie dans les cavités de moulage (7),
on retire les picots (3) avec les éléments d'accrochage (4) hors des cavités de moulage (7),
on tire en continu le support (2) avec les picots (3) et les éléments d'accrochage (4), et
le cylindre de moulage (6) se compose, dans la région des cavités de moulage (7), au moins localement d'un matériau poreux, qui garantit une perméabilité à l'air,
**caractérisé en ce que** le matériau poreux est un matériau expansé, un matériau fritté, un matériau déposé par soudage et/ou par projection.

2. Procédé selon la revendication 1, **caractérisé en ce que** la surface latérale du cylindre de moulage (6) est pourvue d'une couche (29) empêchant le passage d'air ou au moins réduisant le passage d'air par comparaison avec le matériau poreux.

3. Procédé selon la revendication 1 ou 2, **caractérisé en ce que** la matière fondue pénètre dans les pores (22) dans la région de la cavité de moulage (7) selon la grandeur des pores (22) adjacents à la paroi de la cavité de moulage, et cette matière est prévue, après le retrait hors de la cavité de moulage (7), sur la pièce de fermeture auto-agrippante (1) sous la forme de saillies (30) dressées sur le picot (3).

4. Procédé selon au moins une des revendications précédentes, **caractérisé en ce que** la surface est revêtue, dans la région de la cavité de moulage (7), de préférence y compris au moins une partie des pores (22), avec un revêtement augmentant la capacité de glissement, de préférence une couche de nanoparticules (23).

5. Procédé selon au moins une des revendications précédentes, **caractérisé en ce que**, avant et/ou pendant le remplissage de la cavité de moulage (7), on aspire l'air se trouvant dans celle-ci via la porosité du matériau du cylindre de moulage (6).

6. Procédé selon au moins une des revendications précédentes, **caractérisé en ce que**, pour aider le retrait des picots (3) avec des éléments d'accrochage (4), on produit une surpression à l'intérieur de la cavité de moulage (7) via la porosité du matériau du cylindre de moulage (6).

7. Procédé selon au moins une des revendications précédentes, **caractérisé en ce que** l'on produit soit une dépression soit une surpression à l'intérieur des cavités de moulage (7) selon la position angulaire du cylindre de moulage (6).

8. Procédé selon au moins une des revendications précédentes, **caractérisé en ce que** l'orientation de la cavité de moulage (7) est essentiellement perpendiculaire à la surface latérale du cylindre de moulage (6).

9. Procédé selon au moins une des revendications précédentes, **caractérisé en ce que** la cavité de moulage (7) présente une partie de paroi (26) s'étendant de préférence essentiellement perpendiculairement à la surface, ainsi qu'une partie de paroi évasée (27) qui s'y raccorde.

10. Procédé selon au moins une des revendications précédentes, **caractérisé en ce qu'**une région partielle de la cavité de moulage (7), de préférence la partie de paroi évasée (27) de la cavité de moulage (7), est décapée, de préférence décapée par projection.

11. Procédé selon au moins une des revendications précédentes, **caractérisé en ce qu'**une région partielle de la cavité de moulage (7), de préférence la partie de paroi (26) de la cavité de moulage (7) s'étendant essentiellement perpendiculairement à la surface, est forée, érodée ou pratiquée avec un laser.

12. Procédé selon au moins une des revendications précédentes, **caractérisé en ce que** la porosité se situe dans un domaine 1/min-cm²-bar de 0,010 à 0,09, de préférence de 0,015 à 0,08 1/min-cm²-bar, de préférence encore de 0,02 à 0,07 1/min-cm²-bar, lorsqu'une pression comprise entre 3 bar et 7 bar est appliquée.

13. Procédé de réalisation d'un cylindre de moulage à utiliser dans un procédé selon au moins une des revendications précédentes, dans lequel on produit une couche poreuse en une seule pièce (12), on relie la couche poreuse à un support de base (13) du cylindre de moulage (6) et on pratique ensuite des trous dans la couche poreuse (12).

14. Procédé selon la revendication 13, **caractérisé en ce que** l'on forme ensuite la région évasée par décapage, en particulier par décapage par projection.

15. Procédé selon la revendication 13 ou 14, **caractérisé en ce que** l'on colmate vers l'extérieur la couche poreuse (12) dans la région de la surface latérale du cylindre de moulage (6).

16. Cylindre de moulage à utiliser dans un procédé selon au moins une des revendications précédentes 1 à 12, qui est réalisé par un procédé selon une revendication 13 à 15.
